# EUROPEAN PATENT SPECIFICATION

(11) **EP 0 779 695 B1**
(45) Date of publication and mention of the grant of the patent: **20.10.1999**
(21) Application number: 96308104.7
(22) Date of filing: 08.11.1996
(51) Int. Cl.: H02K 1/27

(54) **Rotor disc**
Rotorscheibe
Disque d'un rotor

(30) Priority: 14.12.1995 GB 9525545
(43) Date of publication of application: 18.06.1997
(73) Proprietor: ROLLS-ROYCE POWER ENGINEERING plc, Newcastle-upon-Tyne NE3 3SB (GB)
(72) Inventor: Mitcham, Alan John, Ponteland, Northumberland NE20 9LJ (GB); Prothero, David Huw, Cramlington, Northumberland NE23 6EJ (GB); Grime, Colin John, Culcheth, Cheshire WA3 4LL (GB)
(74) Representative: Barcock, Ruth Anita

(56) References cited:
- DE-C- 4 138 014
- DE-C- 4 330 272
- GB-A- 2 159 340

## Description

The present invention relates to a rotor disc for use in an electrical machine and in particular to the construction of an active rim on the rotor disc.

Electrical machines which operate in accordance with transverse flux principles consist of an armature winding in the form of a circular coil co-axial with a rotor. The rotor consists of an active rim comprising a multiplicity of magnets and laminated poles, fastened to a rotor disc. The armature winding links the flux generated by the permanent magnets mounted on the rim of the rotor disc by means of a series of stator cores.

The rotor disc may support several rotor rims typically arranged in pairs on opposite sides of the disc. Each rotor rim is circumferential and may consist of a single row of magnets and laminated pole pieces or a double row separated by an insulated spacer.

Smaller transverse flux motors use a combination of through bolt clamping of the pole laminations and gluing of the magnets. A rotor of this type is known, for example, from DE-C-41 38 014. These motors produce relatively little torque and the transfer of torque to the rotor disc is achieved mainly by shear and bending effects in the through bolts.

For larger transverse flux motors the forces are taken predominately by bending in the lamination stack.

A rotor disc in accordance with the present invention seeks to provide a rotor rim having improved integrity, the pole pieces of which can withstand forces without significant deflection.

According to the present invention a rotor disc for use in an electrical machine has at least one circumferential rotor rim mounted thereon, the rotor rim comprises at least one row of alternate magnets and laminated pole pieces, the laminations in each pole piece being supported by at least one bolt which extends through the rotor disc, means being provided on the bolt for compressing the laminations characterised in that the means for compressing the laminations is resilient to maintain the correct compressive force on the laminated pole piece throughout operation.

Compressing the laminations gives the pole pieces the required structural stiffness and the resilience ensures maintenance of the correct compressive force on the laminated stack throughout operation.

Preferably the means for compressing the laminations are nuts, the resilience being provided by sprung washers which may be belleville washers.

The present invention will now be described with reference to the accompanying drawings in which;

Figure 1 is a cross-sectional view of a transverse flux motor having a rotor constructed in accordance with the present invention.

Figure 2 is an enlarged view of part of one of the rotor rims shown in figure 1 having laminated pole pieces.

Figure 3 is an enlarged cross-sectional view through one of the laminated rotor poles shown in figure 2 compressed in accordance with the present invention.

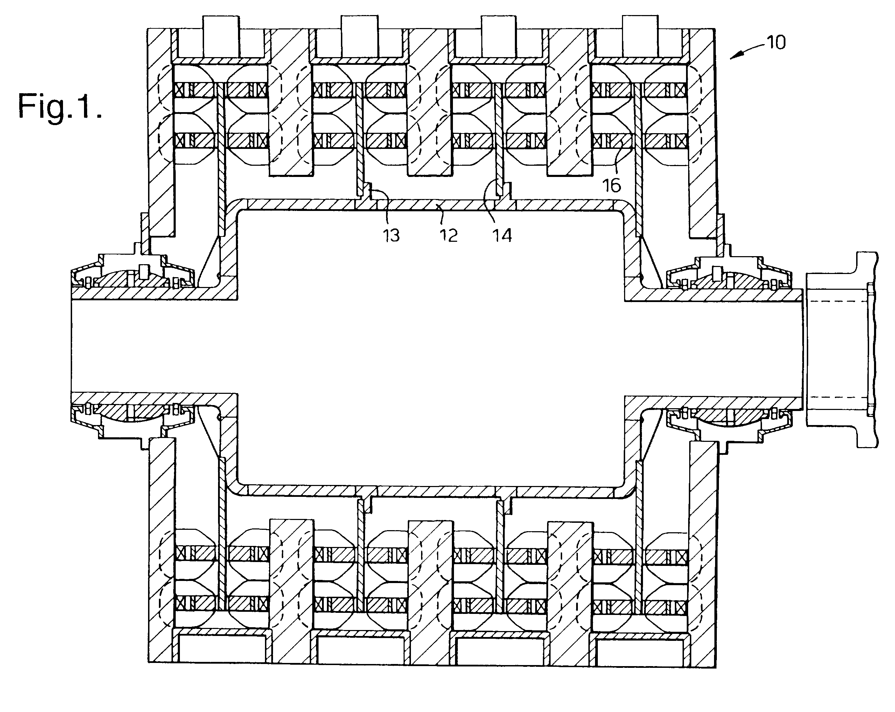

Referring to figure 1 a transverse flux motor, generally indicated at 10 comprises a rotor and a stator assembly.

The rotor assembly has four rotor discs 14 bolted to flanges 13 on a hollow shaft 12. Each disc 14 has four circumferential rotor rims 16 which support the active rotor components for four motor phases.

Each rim 16 consists of a single row of alternate pole pieces 18 and permanent magnets 20. Suitable magnet materials are the high energy rare earth magnet materials such as samarium cobalt and neodymium iron boron.

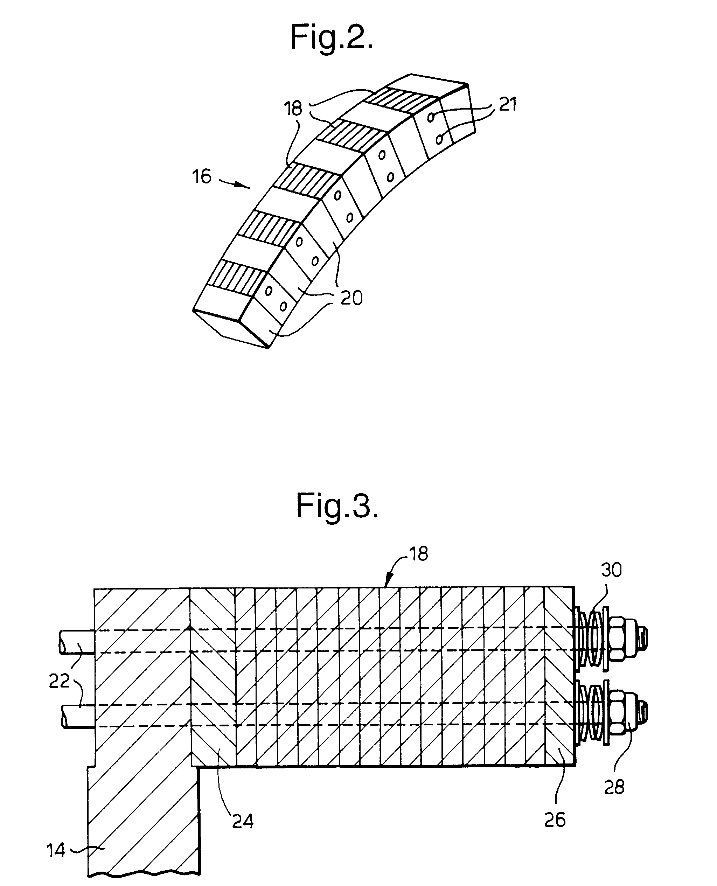

The pole pieces 18 are laminated, figure 2, and bolt holes 21 are provided through the stack of laminations. Bolts 22 shown in figure 3 pass through the bolt holes 21 to hold the stack together.

Each laminated pole piece 18 is supported on two bolts 22, figure 3. The bolts 22 are electrically insulated and are fastened to the rotor disc 14.

A compressive force is applied to the laminated pole piece 18 via two annular members 24 and 26 made from glass reinforced plastic. The outer annular member 26 is tightened down using nuts 28 and a number of sprung washers 30.

The compressive force on the laminations gives the pole piece 18 the required structural stiffness to minimise deflections when in operation. By compressing the laminated stack it prevents one edge of the pole piece 18 coming into tension as torque is transmitted to the rotor disc 14.

The sprung washers 30 are resilient so that the correct compressive force is maintained on the pole piece 18 regardless of relaxation in the stack of laminations and differential expansion of the rotor components. Retaining the compressive force on the lamination stack maintains the required structural stiffness and minimises deflections in the pole piece 18 when in operation.

It will be appreciated by one skilled in the art that the sprung washers 30 could be helical or belleville washers. Alternatively the washers 30 could be manufactured from a material which is sufficiently resilient to compensate for differential expansion or relaxation in the lamination stack.

## Claims

1. A rotor disc (14) for use in an electrical machine (10) has at least one circumferential rotor rim (16) mounted thereon, the rotor rim (16) comprising at least one row of alternate magnets (20) and laminated pole pieces (18), the laminations in each pole piece (18) are supported by at least one bolt (22) which extends through the rotor disc (14), means (28,30) being provided on the bolt (22) for compressing the laminations characterised in that the means (28,30) for compressing the laminations is resilient to maintain the correct compressive force on the laminated pole piece (18) throughout operation.

2. A rotor disc (14) as claimed in claim 1 characterised in that the means for compressing the laminations are nuts (28) and sprung washers (30).

3. A rotor disc (14) as claimed in claim 2 characterised in that the sprung washers (30) are belleville washers.

## Patentansprüche

1. Rotorscheibe (14) zur Verwendung in einer elektrischen Maschine (10) mit wenigstens einem umfangsmäßig verlaufenden Rotorreifen (16), der an der Scheibe befestigt ist, wobei der Rotorreifen (16) aus wenigstens einer Reihe von Magneten (20) und lamellierten Polstücken (18) besteht, die abwechselnd angeordnet sind, wobei die Lamellen in jedem Polstück (18) von wenigstens einem Bolzen (22) getragen werden, der durch die Rotorscheibe (14) hindurchgeführt ist und Mittel (28, 30) auf dem Bolzen (22) vorgesehen sind, um die Lamellen zusammenzupressen,
dadurch gekennzeichnet, daß die Mittel (28, 30) zum Zusammenpressen der Lamellen elastisch ausgebildet sind, um die richtige Kompressivkraft auf dem lamellierten Polstück (18) während des Betriebes aufrechtzuerhalten.

2. Rotorscheibe (14) nach Anspruch 1,
dadurch gekennzeichnet, daß die Mittel zum Zusammenpressen der Lamellen von Muttern (28) und Federscheiben (30) gebildet werden.

3. Rotorscheibe (14) nach Anspruch 2,
dadurch gekennzeichnet, daß die Federscheiben (30) Tellerfedern sind.

## Revendications

1. Disque de rotor (14) destiné à être utilisé dans une machine électrique (10) comprenant au moins une couronne de rotor circonférentielle (16) montée sur le disque, la couronne de rotor (16) comprenant au moins une rangée d'aimants (20) et des pièces de pôle laminées (18) alternés, les laminations dans chaque pièce de pôle (18) étant supportées par au moins un boulon (22) qui s'étend à travers le disque de rotor (14), des moyens (28,30) étant prévus sur le boulon (22) pour comprimer les laminations, caractérisé en ce que les moyens (28.30) pour comprimer les laminations sont résilients pour maintenir la force de compression correcte sur la pièce de pôle laminée (18) durant le fonctionnement.

2. Disque de rotor (14) selon la revendication 1, caractérisé en ce que les moyens pour comprimer les laminations sont des écrous (28), et des rondelles-ressorts (30).

3. Disque de rotor (14) selon la revendication 2, caractérisé en ce que les rondelles-ressorts (30) sont des rondelles belleville.
